# EUROPÄISCHE PATENTSCHRIFT

(11) **EP 0 966 501 B1**
(45) Veröffentlichungstag und Bekanntmachung des Hinweises auf die Patenterteilung: **11.07.2001**
(21) Anmeldenummer: 98914866.3
(22) Anmeldetag: 05.03.1998
(51) Int. Cl.: C08J 3/22, C08K 5/00, C08L 23/06

(54) **VERWENDUNG VON POLYAMIDEN ALS DEFORMATIONSSTABILISATOREN FÜR POLYMERE**
THE USE OF POLYAMIDES AS DEFORMATION STABILIZERS FOR POLYMERS
UTILISATION DE POLYAMIDES EN TANT QUE STABILISANTS DE DEFORMATION POUR POLYMERES

(30) Priorität: 14.03.1997 DE 19710523
(43) Veröffentlichungstag der Anmeldung: 29.12.1999
(73) Patentinhaber: Cognis Deutschland GmbH, 40551 Düsseldorf (DE)
(72) Erfinder: DI FIORE, Carmine, I-80067 Sorrento (IT); BERTI, Fabio, I-50013 Campi Bisenzio (IT); ROSSINI, Angela, I-20162 Milano (IT)
(86) Internationale Anmeldenummer: EP9801230
(87) Internationale Veröffentlichungsnummer: WO9841570

(56) Entgegenhaltungen:
- WO-A-93/10191
- DE-A- 2 035 094
- US-A- 4 340 528
- US-A- 4 786 678

## Beschreibung

### Gebiet der Erfindung

Die Erfindung betrifft den Zusatz von Polyamiden zu mit organischen Farbpigmenten eingefärbten kristallinen Polymeren, ein Verfahren zur Herstellung von kristallinen Polymeren und daraus hergestellter Spritzgüter mit verbesserten Verbrauchseigenschaften sowie Zubereitungen, die Polyamide und organische Farbpigmente enthalten.

### Stand der Technik

Kristalline Polymere wie insbesondere high-density Polyethylen werden vielfach zur Herstellung von Spritzgütern, wie beispielsweise Kunststoffässern, -kisten, -flaschen oder Gartenmöbel verwendet. Hierzu wird das aufgeschmolzene Polymer in der Regel bei etwa 300°C in die Form gespritzt, die dann allmählich abgekühlt wird und schließlich das Spritzgut freigibt. in vielen Fällen ist es gewünscht, farbige Produkte herzustellen, weswegen man den Polymerschmelzen Farbpigmente zusetzt. Für die Erzielung intensiver Blau- und Grüntöne werden beispielsweise Phthalocyanine, für Rot- und Orangetöne Azo- oder Anthrachinonfarbstoffe eingesetzt. Von Nachteil ist dabei aber, daß diese organischen Farbstoffe oberhalb einer kritischen Konzentration von etwa 50 ppm mit den Polymeren in Wechselwirkung treten können, wodurch es zu einer Störung der Kristallstruktur kommt. Dies macht sich in einer Verformung der Spritzgüter, dem sogenannten "warpage"-Effekt, bemerkbar, d.h. eine an sich Fläche, die der Spritzform entsprechend eigentlich hätte plan sein sollen, ist gewellt, was beispielsweise das Stapeln dieser Produkte deutlich erschwert. Ein weiterer wesentlicher Nachteil besteht darin, daß die Kristallstruktur mitunter so stark gestört ist, daß es bei Abkühlung zu Rissen und Brüchen im Material kommen kann. Es ist sofort klar, daß beispielsweise ein Kunststoffaß, welches bei Außenlagerung in der Nacht brüchig wird, keinen Nutzen besitzt.

In der Vergangenheit hat es nicht an Versuchen gefehlt, diesem Problem abzuhelfen. Im wesentlichen beschränkten sich diese jedoch darauf, anstelle organischer Farbpigmente anorganische Stoffe einzusetzen. Auf diese Weise ist das Farbspektrum jedoch stark eingeschränkt. Eine andere Möglichkeit besteht darin, die Spritzgüter in der Form sehr lange auskühlen zu lassen. Dies ist natürlich im Hinblick auf den Durchsatz nicht von Vorteil. Aus der deutschen Patentanmeldung **DE-A1 4313090** (BASF) ist ein Verfahren zur Vermeidung von Deformationserscheinungen an HDPE-Spritzgütern bekannt, bei dem man organische Pigmente einsetzt, die zuvor einer Tieftemperatur-Plasmabehandlung unterworfen waren. Das Verfahren ist freilich für eine großtechnische Durchführung wegen des hohen technischen Aufwands wenig geeignet. Weiterhin besteht die Möglichkeit, die Kristallinität des Polymers herabzusetzen, indem man entsprechende Co-Monomere wie beispielsweise Polypropylen oder Maleinsäureanhydrid einkondensiert **[JP-A Hei 06/329811** (Showa Denko KK); **US 4,032,600** (Chemplex)]. Polymere diesen Typs erfüllen jedoch nicht unbedingt die gestellten Anforderungen.

Demzufolge hat die komplexe Aufgabe der Erfindung darin bestanden, Additive zur Verfügung zu stellen, welche mit organischen Pigmenten eingefärbte kristalline Polymere, vorzugsweise mit Phthalocyaninen eingefärbtes HDPE, in solcher Weise stabilisiert, daß es nicht mehr zu Deformationen und Kältebrüchen kommt.

### Beschreibung der Erfindung

Gegenstand der Erfindung ist die Verwendung von Polyamiden als Deformationsstabilisatoren für die Herstellung von mit organischen Farbpigmenten eingefärbten kristallinen Polymeren, wie in Anspruch 1 beschrieben.

Überraschenderweise wurde gefunden, daß schon der Zusatz kleiner Mengen von Polyamiden zu mit organischen Farbpigmenten eingefärbter kristalliner Polymere die Deformation während des Spritzgußes ("warpaging") deutlich reduziert und die Kältebeständigkeit nachhaltig verbessert. Dieser Effekt kommt dann besonders zur Geltung, wenn es darum geht, die Eigenschaften von HDPE, das mit Phthalocyaninpigmenten eingefärbt wurde bzw. daraus hergestellter Spritzgüter durch Zusatz von Polyamiden auf Basis von Dimerfettsäure und aro-matischen Diaminen zu verbessern.

### Polyamide

Polyamide, die als Stabilisatoren vorzugsweise in Betracht kommen, stellen Kondensationsprodukte von (a) Dicarbonsäuren der Formel (I),

**HOOC-X-COOH** **(I)**

in der X für eine lineare oder verzweigte Alkylengruppe mit 4 bis 10 Kohlenstoffatomen oder den Rest der Dimerfettsäure steht, mit (b) Diaminen der Formel **(II)**,

**H**_{**2**}**N-Y-NH**_{**2**} **(II)**

in der Y für eine lineare oder verzweigte Alkylengruppe mit 4 bis 10 Kohlenstoffatomen oder einen gegebenenfalls C₁-C₈-alkyl, amino- oder hydroxysubstituierten Phenylrest steht, dar. Typische Beispiele sind Polyamide, die man durch Kondensation von Adipinsäure, 1,12-Dodecandisäure oder Dimerfettsäure mit Hexamethylendiamin, Diamino- oder Triaminobenzol erhält. Als besonders vorteilhaft hat sich der Einsatz von Dimerfettsäure als Dicarbonsäure erwiesen. Dimerfettsäure wird durch Dimerisierung von Ölsäure hergestellt und weist in Summe 36 Kohlenstoffatome auf. Im Zuge der An-Reaktion kommt es zur Bildung eines ungesättigten Cyclus im Molekül. Die Dimerfettsäure kann als reine Fraktion eingesetzt werden oder aber als technische Mischung, die unmittelbar bei der Dimerisierung anfällt und dann noch Anteile an verzweigten monomeren Carbonsäuren und Trimeren enthält. Als besonders wirksame Stabilisatoren haben sich weiterhin Polyamide erwiesen, die Kondensationsprodukte der Dimerfettsäure mit aromatischen Diaminen, insbesondere Diamino- und Triaminobenzol darstellen. Bei der Kondensation der beiden Komponenten kommt es zur Ausbildung einer dreidimensionalen Netzstruktur, die sich in idealer Weise insbesondere der kristallinen Struktur des HDPE anpaßt und somit Defekte in der Kristallinität ausgleichen kannn. Polyamide der genannten Art werden beispielsweise in der deutschen Patentanmeldung **DE-A1 4408276** (Henkel) beschrieben, auf deren Lehre ausdrücklich Bezug genommen wird. Üblicherweise setzt man die Polyamide in Mengen von 0,01 bis 49,9, vorzugsweise 0,1 bis 10 und insbesondere 1 bis 5 Gew.-% - bezogen auf die kristallinen Polymere - ein.

### Kristalline Polymere

Das Problem des "warpage" und des Kältebruchs tritt bei praktisch allen kristallinen Olefinen, wenn man ihnen organische Farbpigmente zusetzt. Demzufolge erstreckt sich die Erfindung beispielsweise auf Polyolefine, Polyacrylate, Polyacrylamide, Polyvinylacetate, Polyethylenimine und Polyoxymethylene. Die größte technische und ökonomische Bedeutung besitzt das Problem indes für gefärbte high-density Polyethylen und daraus hergestellte Spritzgüter, da diese Polymere eine besonders hohe Kristallinität besitzen und besonders leicht, beispielsweise über die zentralen Metallatome in Phthalocyaninkomplexen mit organischen Farbstoffpigmenten in Wechselwirkung treten können. Wie schon erwähnt, passen sich die erfindungsgemäß einzusetzenden Polyamide, insbesondere die auf Basis von Dimerfettsäure und aromatischen Diaminen der Kristallstruktur gerade des HDPE besonders gut an, so daß die Verbesserung der Eigenschaften von high density Polyethylen nicht nur eine zentrale Aufgabe der Erfindung darstellt, sondern die vorgeschlagene Lösung auch hierfür in besonderer Weise geeignet ist.

### Organische Farbpigmente

Der Effekt des "warpage" und des Kältebruchs bei Spritzgütern auf Basis kristalliner Polymere, insbesondere HDPE, tritt praktisch nur dann auf, wenn diese organische Farbpigmente enthalten. Besonders sensibel ist der Einsatz von Phthalocyaninkomplexen, die man durch Umsetzung von Metallchloriden mit Phthalsäuredinitril erhalten kann und die der Formel (III) folgen, 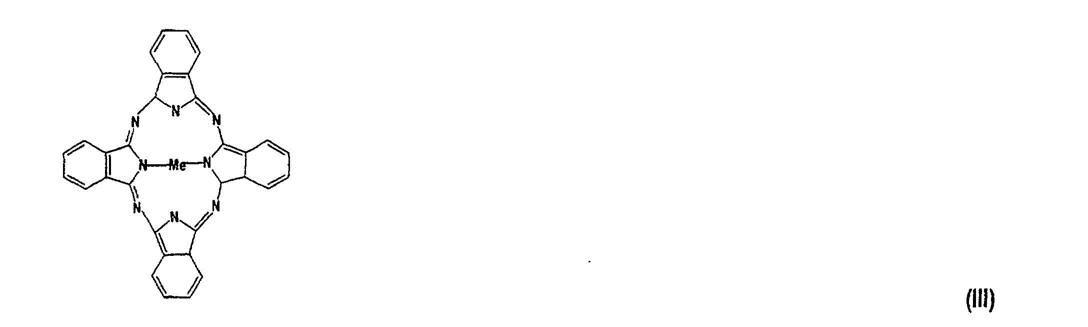 in der Me für ein zweiwertiges Metall, beispielsweise Eisen, Mangan, Nickel, Cobalt und inbesondere Cupfer steht. Eine weitere Gruppe von organischen Farbpigmenten, auf die sich die Erfindung bezieht, stellen Azoverbindungen, speziell in Form der verlackten Azopigmente dar. Azofarbstoffe werden üblicherweise durch Einwirkung einer Diazoniumverbindung auf ein Amin, Phenol oder auf die Sulfon- oder Carbonsäuregruppe eines Amins, Phenols oder Naphthols erhalten. Ein weitere Gruppe von geeigneten organischen Farbpigmenten sind die Anthrachinonfarbstoffe, die der allgemeinen Formel (IV) folgen, 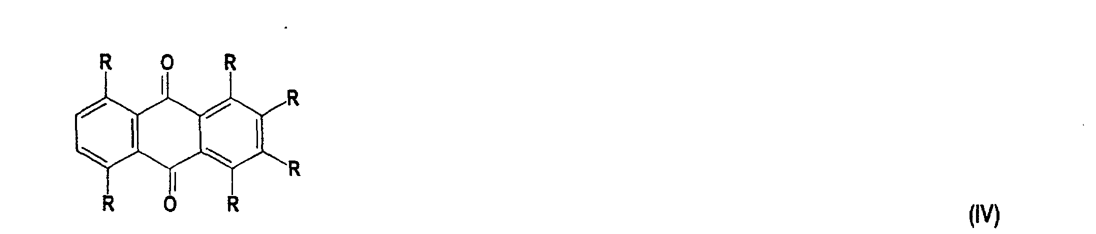 in der R für Wasserstoff oder Hydroxyl steht. Typische Beispiele, bei denen das System der Reste permutiert wurde, sind Anthrachinon, Alizarin, Chinizarin, Chrysazin, Hystazarin, Purpurin, Chrysophansäure, Chinalizarin und Flavopurpurin. Üblicherweise werden die Farbpigmente in Mengen von 0,01 bis 5, insbesondere 0,07 bis 1 Gew.-% - bezogen auf die kristallinen Polymere - eingesetzt.

### Füll-, Hilfs- und Zusatzstoffe

Es hat sioch als vorteilhaft erwiesen, die Polyamide nicht alleine, sondern zusammen mit weiteren Addit-tiven einzusetzen, die einerseits der stabilisierenden Effekt unterstützen und andererseits die Performance der Kunststoffe auch in anderer Hinsicht zu verbessern vermögen. Besonders bevorzugt ist der Einsatz der Polyamide zusammen mit Füllstoffen wie beispielsweise Calciumcarbonat, das die Dispergierung des Polyamids im Polymer erleichtert. Die Einsatzmenge liegt hier bei etwa 0,01 bis 5, und vorzugsweise 0,5 bis 1,5 Gew.-% - bezogen auf die kristallinen Polymere.

Weitere Zusatzstoffe, die zusammen mit den Polyamiden und dem Calciumcarbonat eingesetzt werden können, sind: UV-Stabilisatoren, Antioxidatien, Metalldesaktivatoren, Gleitmittel (z.B. Fettalkohole, Dicarbonsäureester, Fettsäureester, Fettsäuren, Seifen, Fettsäureamide, Polyethylenwachse), Siliconöle und Siliconharze, Blashilfsmittel (Hydrazine, Semicarbazide, Tetrazole, Benzoxazine, Azodicarbonsäureamide, Metallhydride), Anti-Foggingmittel, Antistatika (quaternäre Ammoniumsalze, Alkylsulfonate, Partialglyceride, Polyole, Polyglycole, Glycerin, Aminethoxylate), Anti-Blockingmittel (Silica, Mineralfasern, Talk), Flammschutzmittel (Phosphorsäureester, Chlorparaffine, Antimontrioxid), Vernetzungsmittel (organische Peroxide), Füllstoffe (Aluminiumtrihydrat, Bariumsulfat, Graphit, Glasfasern, Kaolin, Metalloxide), Weichmacher (Dimethylphthalat, Tri-2-ethylbutylphosphat, Di-2-ethylhexyladipat), optische Aufheller, anorganische Pigmente (Titandioxid) und Metallsalze (Calcium-, Barium- oder Zinkstearat).

### Verfahren

Ein weiterer Gegenstand der Erfindung betrifft ein Verfahren zur Herstellung von mit organischen Pigmenten gefärbten kristallinen Polymeren und daraus hergestellten Gebrauchsgegenständen mit verbesserter Form- und Temperaturbeständigkeit, bei dem man den Polymermassen vor oder während des Spritzgußes Polyamide als Deformationsstabilisatoren zusetzt. In einer besonderen Ausführungsform der Erfindung wird high-density Polyethylen vor dem Spritzguß 0,01 bis 5, vorzugsweise 0,07 bis 1 Gew.-% organische Farbpigmente, vorzugsweise Phthalocyaninpigmente, 0,01 bis 5, vorzugsweise 0,1 bis 3 Gew.-% eines Kondensationsprodukt einer Dimerfettsäure mit einem aromatischen Diamin sowie gegebenenfalls 0,01 bis 5, vorzugsweise 0,5 bis 1,5 Calciumcarbonat zugegeben. Die Polymermasse wird auf etwa 300°C erhitzt und in die Form gespritzt, die dann nach dem Abkühlen das Spritzgut freigibt. Die Erfindung betrifft ferner Zubereitungen in granularer oder in Pulverform wie in Ansprüchen 8 und 9 beschrieben.

Die Polyamide und die weiteren Hilfsstoffe können den kristallinen Polymeren natürlich einzeln beigemischt werden. Es hat sich jedoch als vorteilhaft erwiesen, zunächst einen pulverförmigen Premix herzustellen und diesen dann anschließend zusammen mit Polyethylen zu granulieren. Demzufolge bezieht sich ein weitere Gegenstand der Erfindung auf Zubereitungen in Pulverform ("Premix"), enthaltend
(a) organische Farbpigmente,
(b) Polyamide sowie gegebenenfalls
(c) Füllstoffe sowie weitere Hilfs- und Zusatzstoffe.

Typischerweise enthalten die Pulverzubereitungen
(a) 5 bis 20, vorzugsweise 10 bis 15 Gew.-% Farbpigmente, vorzugsweise Phthalocyanine,
(b) 40 bis 80, vorzugsweise, vorzugsweise 40 bis 60 Gew.-% Polyamide, vorzugsweise Kondensationsprodukte von Dimerfettsäure mit aromatischen Diaminen, und
(c) 0 bis 50, vorzugsweise 30 bis 40 Gew.-% Calciumcarbonat,
mit der Maßgabe, daß sich die Mengenangaben, gegebenenfalls mit weiteren Hilfs- und Zusatzstoffen zu 100 Gew.-% ergänzen. Ein letzter Gegenstand der Erfindung betrifft schließlich Zubereitungen in granularer Form, enthaltend
(a) organische Farbpigmente,
(b) Polyamide,
(c) kristalline Polymere sowie gegebenenfalls
(d) Füllstoffe sowie weitere Hilfs- und Zusatzstoffe.

Zur Herstellung der Granulate ("Masterbatch") wird das kristalline Polymer, vorzugsweise HDPE, aufgeschmolzen und mit 1 bis 2 Gew.-% des Premix versetzt und die Mischung dann bei 140 bis 200°C in an sich bekannter Weise extrudiert und in stückige Form gebracht. Die resultierenden Granulate enthalten die organischen Farbpigmente und die Stabilisatoren und können dann als "Konzentrate" den kristallinen Polymeren vor dem Spritzguß problemlos zugemischt werden. Dies hat zudem den Vorteil, daß die Gefahr von gesundheitsgefährdenden Stäuben im Zusammenhang mit den pulverförmigen Farbpigmenten vermieden wird.

### Beispiele

High-density Polyethylen (Molekulargewicht ca. 2.000.000 Dalton) wurde mit 70 ppm Cupfer-phthalocyanin und gegebenenfalls Stabilisatoren versetzt. Anschließend wurde die Masse auf 290°C erhitzt und in eine Spritzform zur Herstellung von Kisten mit einem Volumen von 100 l gegeben. Die Spritzform wurde abgekühlt und das Spritzgut nach folgenden Kriterien beurteilt:
(a) **Warpage**. Die Bodenfläche der Kisten wurde subjektiv auf Planheit nach folgender Skala beurteilt: (1) = plan, (2) = leichte Unebenheiten, (3) = deutliche Unebenheiten, (4) = starke Unebenheiten.
(b) **Kältebeständigkeit**. Die Kisten wurden 3 Tage bei 0°C gelagert und dann auf Risse und Bruchstellen untersucht. Dabei bedeuten: (+) weder Risse noch Bruchstellen, (-) Rißbildung und (--) Bruchstellen.

Die Ergebnisse sind in Tabelle 1 zusammengefaßt:

**Tabelle 1**

| **Untersuchung von HDPE-Spritzgütern mit und ohne Stabilisatoren (Mengenangaben als Gew.-%)** | | | | | | | |
|---|---|---|---|---|---|---|---|
| **Stabitisatoren/Performance** | **1** | **2** | **3** | **4** | **5** | **V1** | **V2** |
| Macromelt 6208* | 0,5 | 1,0 | 1,5 | 1,0 | 1,5 | - | - |
| Calciumcarbonat | - | - | - | 0,5 | 0,5 | - | 1,5 |
| Eigenschaften | | | | | | | |
| - Warpage | 2 | 2 | 2 | 2 | 1 | 4 | 4 |
| - Kältebruch | - | + | + | + | + | - | - |

| | | | | | | | |
|---|---|---|---|---|---|---|---|
| *) Kondensationsprodukt von Dimerfettsäure mit Triaminobenzol (Henkel SpA, Fino/lT) | | | | | | | |

## Patentansprüche

1. Verwendung von Polyamiden in mit organischen Farbpigmenten eingefärbten kristallinen Polymeren, welche ausgewählt sind aus der Gruppe, die gebildet wird von Polyolefinen, Polyacrylaten, Polyacrylamiden, Polyvinylacetaten, Polyethyleniminen und Polyoxymethylenen zur Reduzierung der Deformation während des Spritzgusses.

2. Verwendung nach Anspruch 1, **dadurch gekennzeichnet**, daß man als Polyamide Kondensationsprodukte von (a) Dicarbonsäuren der Formel (1),
**HOOC-X-COOH (I)**
in der X für eine lineare oder verzweigte Alkylengruppe mit 4 bis 10 Kohlenstoffatomen oder den Rest der Dimerfettsäure steht, mit (b) Diaminen der Formel (II),
**H**_{**2**}**N-Y-NH**_{**2**} **(II**)
in der Y für eine lineare oder verzweigte Alkylengruppe mit 4 bis 10 Kohlenstoffatomen oder einen gegebenenfalls C₁-C₈-alkyl, amino- oder hydroxysubstituierten Phenylrest steht, einsetzt.

3. Verwendung nach den Ansprüchen 1 und/oder 2, **dadurch gekennzeichnet**, daß man als Polyamide Kondensationsprodukte von Dimerfettsäure mit Di- und/oder Triaminbenzol einsetzt.

4. Verwendung nach mindestens einem der Ansprüche 1 bis 3, **dadurch gekennzeichnet**, daß man als kristalline Polymere high-density Polyethylen einsetzt.

5. Verwendung nach mindestens einem der Ansprüche 1 bis 4, **dadurch gekennzeichnet**, daß man organische Farbpigmente einsetzt, die ausgewählt sind aus der Gruppe, die gebildet wird von Phthalocyaninen, Azoverbindungen und Anthrachinonderivaten.

6. Verwendung nach mindestens einem der Ansprüche 1 bis 5, **dadurch gekennzeichnet**, daß man die Polyamide in Mengen von 0,01 bis 49,9 Gew.-% - bezogen auf die kristallinen Polymere - einsetzt.

7. Verfahren zur Herstellung von mit organischen Pigmenten gefärbten kristallinen Polymeren ausgewählt aus der Gruppe, die gebildet wird von Polyolefinen, Polyacrylaten, Polyacrylamiden, Polyvinylacetaten, Polyethyleniminen und Polyoxymethylenen sowie daraus hergestellten Gebrauchsgegenständen mit verbesserter Form- und Temperaturbeständigkeit, **dadurch gekennzeichnet**, daß man den Polymermassen vor oder während des Spritzgusses Polyamide als Deformationsstabilisatoren zusetzt.

8. Zubereitungen in Pulverform, enthaltend
(a) organische Farbpigmente,
(b) Kondensationsprodukte von Dimerfettsäure mit Di- und/oder Triaminbenzol sowie gegebenenfalls
(c) Füllstoffe sowie weitere Hilfs- und Zusatzstoffe.

9. Zubereitungen in granularer Form, enthaltend
(a) organische Farbpigmente,
(b) Kondensationsprodukte von Dimerfettsäure mit Di- und/oder Triaminbenzol,
(c) kristalline Polymere sowie gegebenenfalls
(d) Füllstoffe sowie weitere Hilfs- und Zusatzstoffe.

## Claims

1. The use of polyamides in crystalline polymers pigmented with organic pigments, the crystalline polymers being selected from the group consisting of polyolefins, polyacrylates, polyacrylamides, polyvinyl acetates, polyethylene imines and polyoxymethylenes, for reducing warpage during injection molding.

2. The use claimed in claim 1, characterized in that condensation products of (a) dicarboxylic acids corresponding to formula **(I)**:
**HOOC-X-COOH (I)**
in which X is a linear or branched alkylene group containing 4 to 10 carbon atoms or the residue of the dimer fatty acid, with (b) diamines corresponding to formula (II):
**H**_{**2**}**N-Y-NH**_{**2**} **(II)**
in which Y is a linear or branched alkylene group containing 4 to 10 carbon atoms or an optionally C₁₋₈-alkyl-, amino- or hydroxy-substituted phenyl radical, are used as the polyamides.

3. The use claimed in claims 1 and 2, characterized in that condensation products of dimer fatty acid with diamino- and/or triaminobenzene are used as the polyamides.

4. The use claimed in claims 1 to 3, characterized in that high-density polyethylene is used as the crystalline polymer.

5. The use claimed in claims 1 to 4, characterized in that organic pigments selected from the group consisting of phthalocyanines, azo compounds and anthraquinone derivatives are used.

6. The use claimed at least one of claims 1 to 5, characterized in that the polyamides are used in quantities of 0.01 to 49.9% by weight, based on the crystalline polymers.

7. A process for the production of crystalline polymers pigmented with organic pigments and selected from the group consisting of polyolefins, polyacrylates, polyacrylamides, polyvinyl acetates, polyethylene imines and polyoxymethylenes and consumer articles with improved dimensional stability and heat resistance produced therefrom, characterized in that polyamides are added to the polymer melts as warpage stabilizers before or during injection molding.

8. Powder-form preparations containing
(a) organic pigments,
(b) condensation products of dimer fatty acid with di- and/or triaminobenzene and optionally
(c) fillers and other auxiliaries and additives.

9. Granular preparations containing
(a) organic pigments,
(b) condensation products of dimer fatty acid with di- and/or triaminobenzene and optionally
(c) crystalline polymers and optionally
(d) fillers and other auxiliaries and additives.

## Revendications

1. Utilisation de polyamides dans des polymères cristallins mis en couleurs avec des pigments colorés organiques, qui sont choisis dans le groupe formé des polyoléfines, des polyacrylates, des polyacrylamides, d'acétates de polyvinyle, des polyéthylènelmines, et des polyoxyméthylènes, en vue de réduire la déformation pendant le moulage par injection.

2. Utilisation selon la revendication 1,
caractérisée en ce qu'
on met en oeuvre comme polyamides des produits de condensation de :
(a) des acides dicarboxyliques de formule (I),
HOOC-X-COOH (I)
dans laquelle X représente un groupe alkylène linéaire ou ramifié ayant de 4 à 10 atomes de carbone ou le reste de l'acide gras dimère, avec
(b) des diamines de formule (II),
H₂N-Y-NH₂ (II) (II)
dans laquelle Y représente un groupe alkylène linéaire ou ramifié, ayant de 4 à 10 atomes de carbone ou un radical phényle éventuellement substitué par un alkyle en C₁-C₈, un amino, ou un hydroxy.

3. Utilisation selon l'une quelconque des revendications 1 et/ou 2,
caractérisée en ce qu'
on met en oeuvre comme polyamides, des produits de condensation d'acide gras dimère avec un di- et/ou un triaminobenzène.

4. Utilisation selon au moins l'une quelconque des revendications 1 à 3,
caractérisée en ce qu'
on met en oeuvre comme polymère cristallin, du polyéthylène haute densité.

5. Utilisation selon au moins l'une quelconque des revendications 1 à 4,
caractérisée en ce qu'
on met en oeuvre des pigments colorés organiques qui sont choisis dans le groupe formé des phtalocyanines, des composés azo, et des dérivés de l'anthraquinone.

6. Utilisation selon au moins l'une quelconque des revendications 1 à 5,
caractérisée en ce qu'
on met en oeuvre les polyamides en quantités allant de 0,01 à 49,9 % en poids rapporté aux polymères cristallins.

7. Procédé de production de polymère cristallins colorés avec des pigments organiques choisis dans le groupe formé des polyoléfines, des polyacrylates, des polyacrylamides, des acétates de polyvinyle, des polyéthylèneimines, et des polyoxyméthylènes, ainsi que les objets d'usage produits à partir de ceux-ci ayant une stabilité de forme et à la température améliorée,
caractérisé en ce qu'
on ajoute aux masses de polymère avant ou pendant le moulage par injection, des polyamides comme agents de stabilisation contre la déformation.

8. Préparation sous forme de poudre contenant :
(a) des pigments colorés organiques
(b) des produits de condensation d'acides gras dimères avec un di- ou triaminobenzène, ainsi qu'éventuellement,
(c) des substances de charge ainsi que d'autres adjuvants et additifs.

9. Préparation sous forme de granulés contenant :
(a) des pigments colorés organiques
(b) des produits de condensation d'acides gras dimères avec un di ou triaminobenzène ainsi qu'éventuellement,
(c) des polymères cristallins, ainsi qu'éventuellement,
(d) des substances de charge ainsi que d'autres adjuvants ct additifs.
